# EUROPÄISCHE PATENTSCHRIFT

(11) **EP 0 459 948 B1**
(45) Veröffentlichungstag und Bekanntmachung des Hinweises auf die Patenterteilung: **22.02.1995**
(21) Anmeldenummer: 91810383.9
(22) Anmeldetag: 21.05.1991
(51) Int. Cl.: G05D 27/02, B23Q 17/00, G05D 15/01

(54) **Kraft-Dehnungs-Körperschall-Aufnehmer-Kombination**
Receiver-combination for force, elongation and sound conducted through solids
Combinaison de capteur pour la force, l'extension et la conduction osseuse du bruit

(30) Priorität: 31.05.1990 CH 1842/90
(43) Veröffentlichungstag der Anmeldung: 04.12.1991
(73) Patentinhaber: K.K. HOLDING AG, CH-8408 Winterthur (CH)
(72) Erfinder: Wolfer, Peter, CH-8450 Kleinandelfingen (CH)

(56) Entgegenhaltungen:
- DE-A- 3 833 364
- FR-A- 2 638 524
- US-A- 4 431 937
- US-A- 4 576 049
- US-A- 4 823 618

## Beschreibung

Zur Ueberwachung von automatisierten Bearbeitungsmaschinen werden in wichtigen Kraftleitstellen der Maschinen Mehrkomponenten Kraftmesssensoren oder Dehnungssensoren eingebaut, welche den Kraftfluss in mehrere Koordinaten zerlegen und laufend mit Sollwerten oder Einlernwerten vergleichen. Solche Maschinen, welche die sogenannten 'Geisterstunden' durchfahren, sind CNC gesteuerte Bearbeitungsmaschinen, z.B. Dreh- und Fräszentren, welche vollautomatisch arbeiten und bei geringsten Abweichungen vom Sollzustand Werkzeugwechsel einleiten oder die Maschine stillsetzen.

Solche Ueberwachungsanlagen sind heute bereits als Spezialausrüstungen von verschiedenen Maschinenfabrikanten erhältlich. Ebenso sind die dazu notwendigen Mehrkomponenten Kraft- und Dehnungssensoren im Handel erhältlich. Die dazu notwendige Elektronik und die dazu passende Software wird von einer Reihe von Spezialunternehmern geliefert.

In den letzten Jahren hat sich gezeigt, dass neben den Bearbeitungskräften, Momenten und Dehnungen eine weitere mechanische Grösse: Maschinengeräusche oder Körperschall eine zusätzliche interessante Komponente bilden können in der Ueberwachung von Bearbeitungsvorgängen. Bereits existieren Bohrmaschinen-Ueberwachungsgeräte, welche Bohrerbruch auf Aenderung des Körperschallspektrums überwachen. Auch für Schleifvorgänge hat sich die Körperschallmessung als interessant erwiesen.

Körperschallmessung von den Bearbeitungsvorgängen, wie auch von den Antriebselementen ausgehend, sind interessant in Frequenzbereichen 0.5...50 kHz. Ueblicherweise werden sie mit hochfrequenten Beschleunigungsaufnehmern gemessen. Aufnehmer, die für solche Analysen geeignet sind, können heute handelsüblich beschafft werden. Oft sind dies Körperschallaufnehmer, die in der Autobranche für Klopfmessungen eingesetzt werden. Solche Aufnehmer sind gross und wenig geeignet zum Einbau in Werkzeugmaschinen.

Die Erfindung basiert auf dem Gedanken, dass die Kombinationen Kraft-Körperschallmessung Dehnungs-Körperschallmessung im gleichen Sensor neue Anwendungsmöglichkeiten eröffnen wird. Die Vorteile sind folgende:
· Es braucht nur eine Sensor-Einbaustelle
· Es ist nur eine Kabelverbindung notwendig
· Im Bereich der Feinbearbeitung kann die Körperschallmessung zusätzliche Informationen zur Kraft- und Dehnungsmessung bringen. In der Grobbearbeitung ist die Kraft- bzw. Dehnungsmessung aussagekräftiger als die Körperschallmessung.
   Die beiden Gruppen: Kraft-Dehnungsmessung und Körperschallmessung ergänzen sich in vielen Anwendungsfällen.

Die Gedanken der Erfindung sollen an folgenden 5 Figuren erläutert werden:
- Fig. 1: zeigt einen erfindungsgemässen Kraft-Körperschall-Aufnehmer für eine oder mehrere Kraftkomponenten mit zentrisch angeordnetem Körperschallsensor.
- Fig. 2: zeigt denselben Aufnehmer mit integrierter Verspannmutter
- Fig. 3: zeigt denselben Aufnehmer mit integriertem Keilverspannelement
- Fig. 4: zeigt einen Oberflächen-Dehnungsaufnehmer mit eingebautem Körperschallsensor
- Fig. 5: zeigt einen Bohrungs-Dehnungsaufnehmer mit eingebautem Körperschallsensor.

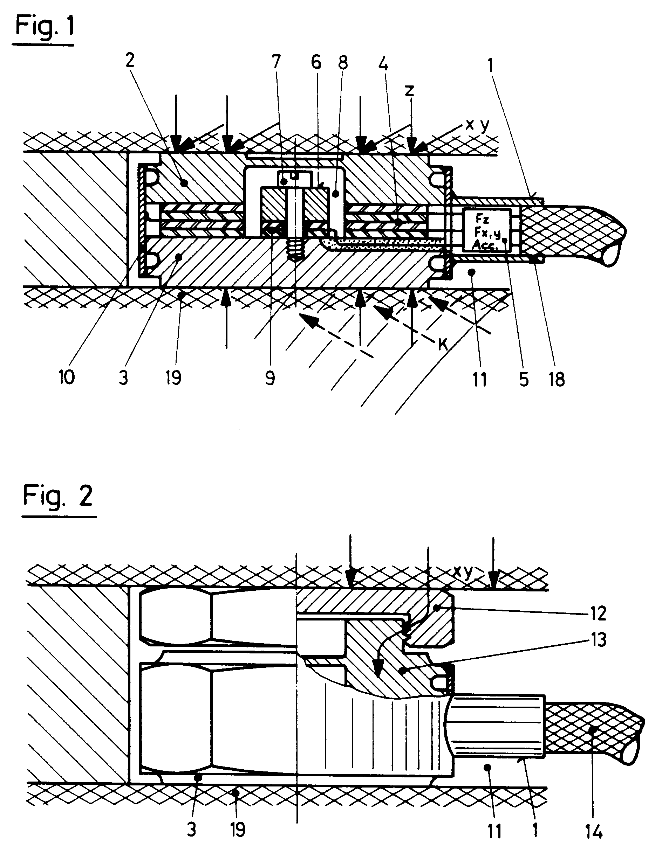

Danach zeigen Fig. 1 bis 3 Ein- bis Mehrkomponenten-Kraftsensoren mit integrierten Verspanneinrichtungen und eingebautem ein- oder mehrachsigen Körperschallsensor.

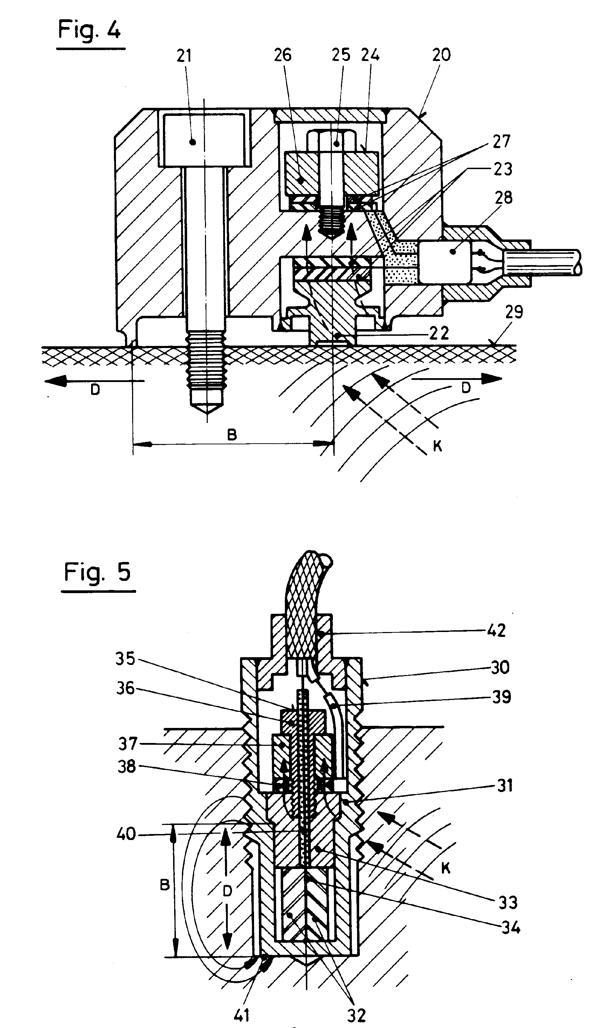

Fig. 4 und 5 zeigen Dehnungssensoren mit eingebautem Ein-oder Mehrachsen-Körperschallsensor. Beide Aufnehmerkategorieren basieren auf piezoelektrischen Messtechniken. In beiden Anwendungsgruppen können Impedanzwandler-Vorverstärker in die Sensoren bzw. deren Steckerpartien integriert werden.

Fig. 1 zeigt einen erfindungsgemässen Ein- oder Mehrkomponenten Kraft-Körperschall-Aufnehmer 1 bestehend aus der Deckplatte 2, Grundplatte 3 und dazwischen unter Vorspannung angeordneten Ringscheiben-Kristallsatz 4 und Aussengehäuse 10, mittels welcher der Aufnehmer 1 dicht verschweisst ist. Der Ringscheiben-Kristallsatz 4 kann je nach Anforderung 1, 2 oder 3 Kraftkomponenten also Z-Kräfte oder XY-oder XYZ-Kräfte erfassen. Vorzugsweise werden dazu Quarzkristallscheiben verschiedener Schnittrichtungen eingesetzt. Es sind aber auch Piezokeramiken möglich.

Zwischen dem Ringscheiben-Kristallsatz 4 ist der Körperschallsensor 6 auf derselben Montagefläche untergebracht. Er besteht aus dem Kristallsatz 9, der Masse 8 und der Vorspannschraube 7.

Das Beispiel Fig. 1 zeigt eine Kristallanorndung für zwei Kraftkomponenten und einen Einkomponenten Körperschallsensor 6. Der Körperschallsensor 6 ist ein Beschleunigungsaufnehmer mit einer Eigenfrequenz von über 50 kHz. Je nach Anzahl der Kristallanordnungen kann er ebenfalls wie der Kraftaufnehmer bei mehreren Achsen empfindlich sein. Es kann vorteilhaft sein, den Kristallsatz 9 in drei Richtungen XYZ empfindlich zu machen und alle drei Signalelektroden zusammenzuschalten, sodass nur ein Signalausgang entsteht.

Vorteilhaft wird in der Anschlussbuchse 18 ein Impedanzwandler/Vorverstärker 5 angeordnet, der heute in Chipform erhältlich ist und sehr wenig Platz beansprucht.

Der Kraftkörperschall-Aufnehmer 1 wird in einer Nische 11 unter mechanischer Vorspannung eingebaut, an einer Stelle, wo die verschiedensten Kräfte XYZ und Körperschallsignale K eintreffen und weitergeleitet werden. Für die einwandfreie Uebertragung von Körperschallsignalen K ist ein möglichst luftspaltfreier Kontakt der Grundplatte 3 mit der Montagefläche 19 nötig.

Fig. 2 zeigt denselben Aufnehmer 1, jedoch mit integrierter Vorspannmutter 12. Die Deckplatte 2 ist zur Platte 13 ausgebaut mit Gewindenippelansatz. Damit kann der Sensor 1 in jeder Nische 11 kraftleitend eingebaut werden.

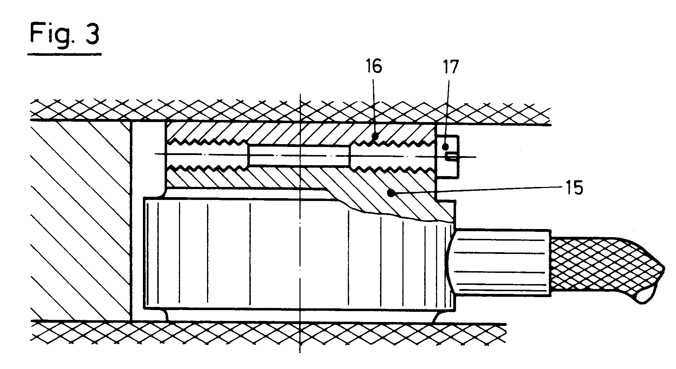

Fig. 3 zeigt eine Variante von Fig. 2. Die Deckplatte 2 nach Fig. 1 ist als integrierte Keilplatte 15 gestaltet, welche über die Doppelschraube 17 mit der oberen Keilplatte 16 verbunden ist. Auch mit dieser Anordnung kann ein kraftleitender Einbau in jeder Nische 11 erreicht werden.

Fig. 4 zeigt einen Oberflächen-Dehnungs-Aufnehmer 20 mit eingebautem Körperschallsensor 24. Der Abstützkopf 22 überträgt den Dehnweg auf den Schubkristallsatz 23, dessen Signalelektrode direkt in den Impedanzwandler/Vorverstärker 28 eingeleitet wird. Der Abstützkopf 22 wird mittels Schraube 21 auf die Messoberfläche 29 gepresst, sodass für eintretende Körperschallwellen K ideale Uebergangsverhältnisse existieren, sodass sie direkt zum Körperschallsensor 24 gelangen. Dieser besteht aus dem Ringscheiben-Kristallsatz 27 der Masse 26 und der Vorspannschraube 25. Der Ringscheiben-Kristallsatz 27 wiederum kann ein- oder mehrachsig empfindlich sein. Einfachheitshalber werden die Signalelektroden bei Mehrachsempfindlichkeit zusammengeschaltet und dem Impedanzwandler/Vorverstärker 28 zugeleitet.

Fig. 5 zeigt einen erfindungsgemässen Schraub-Dehnungsaufnehmer 30, der mittels Schraubkörper 31 gegen die Aufpressfläche 41 gepresst wird. Dehnungen D infolge Kraftänderungen werden auf den Kristallsatz 32 übertragen, dessen Signal über die Signalelektrode 34 der Signalleitung 40 übertragen wird. Auf dem Vorspannkörper 33 der mit Schraubkörper 31 verschweisst ist, befindet sich der Körperschallsensor 35, dessen Masse 37 über den Ringscheiben-Kristallsatz 38 mittels Vorspannschraube 36 verspannt ist. Der Ringscheiben-Kristallsatz 38 kann wiederum ein- oder mehrachsig ausgebildet sein, wobei auch im Mehrachsenzustand eine Zusammenschaltung in einen Signalleiter 39 vorteilhaft ist. In der Anschlussbuchse 42 kann wiederum ein Impedanzwandler/Vorverstärker untergebracht sein. Die Körperschallwellen K treten über die verspannte Gewindepartie in das Gegenlager 33 ein, auf dem der Körperschall-Sensor 35 montiert ist. Damit ist wiederum eine gute Ankopplung an die den Schraub-Dehnungsaufnehmer umgebenden Wandpartien möglich.

Der gezeigte Schraub-Dehnungsaufnehmer 30 misst Dehnung in der Achsrichtung des Schraubgewindes. Es sind aber auch Schraub-Dehnungsaufnehmer im Handel, welche Dehnungen quer zur Achsrichtung messen. Auch bei solchen Geräten ist der Einbau eines Körperschallsensors interessant. Er kann seine Empfindlichkeit achsial oder quer dazu haben. Es können aber auch Körperschallsensoren verwendet werden, welche Mehrkomponenten Kristallsätze aufweisen.

Der erfindungsgemässe Einbau der Körperschall-Sensoren in die Kraft- oder Dehnungssensoren bringt wie anfangs erwähnt, Einbau-Vorteile. Zudem bringt man damit die Körperschall-Sensoren möglichst nah an die Körperschall erzeugenden Elemente. Damit kann die Ueberwachungssensorik prozessnah untergebracht werden. Ferner ergibt die Kombinationsauswertung der beiden Signaltypen Erkenntnisse, welche die Komplexität der Körperschall-Signalverarbeitung vereinfachen können.

Universelle Ueberwachungssysteme der Zukunft werden mehrachsige Kräfte, Dehnungen und Körperschall-Signale zu verarbeiten haben. Je einfacher die dazu nötigen Aufnehmer kombiniert und montiert werden können, desto zuverlässiger wird die Prozessüberwachung möglich werden. Die Erfindung ermöglicht damit weitere Fortschritte in der rechnergestützten Prozess- und Anlagenüberwachung.

## Patentansprüche

1. Kraft-Dehnungs-Körperschall-Aufnehmer Kombination zur Ueberwachung von automatischen Bearbeitungsmaschinen, dadurch gekennzeichnet, dass in einem Ein-resp. Mehrkomponenten Kraftaufnehmer innerhalb des ringförmigen Ringscheiben-Kristallsatzes (4), ein Körperschallsensor (6) untergebracht ist.

2. Kraft-Dehnungs-Körperschall-Aufnehmer Kombination zur Ueberwachung von automatischen Bearbeitungsmaschinen, dadurch gekennzeichnet, dass in einem Oberflächen-Dehnungsaufnehmer (20) ein Körperschallsensor (24) untergebracht ist.

3. Kraft-Dehnungs-Körperschall-Aufnehmer Kombination zur Ueberwachung von automatischen Bearbeitungsmaschinen, dadurch gekennzeichnet, dass in einem Schraub-Dehnungs-Aufnehmer (30) ein Körperschallsensor (35) untergebracht ist.

4. Kraft-Dehnungs-Körperschall-Aufnehmer Kombination nach Anspruch 1, dadurch gekennzeichnet, dass in der Deckplatte (13) ein Feingewindestutzen integriert ist, der mittels Vorspannmutter (12) eine kraftschlüssige Verspannung in der Einbaunische (11) ermöglicht.

5. Kraft-Dehnungs-Körperschall-Aufnehmer Kombination nach Anspruch 1, dadurch gekennzeichnet, dass die Deckplatte (15) eine Keilanordnung integriert hat, auf welcher die Gegenkeilplatte (16) mit Verspannschraube (17) montiert ist.

6. Kraft-Dehnungs-Körperschall-Aufnehmer Kombination nach Ansprüchen 1, 4 und 5, dadurch gekennzeichnet, dass der Ringscheiben-Kristallsatz (4) einachsig, also nur für Z-Kräfte oder mehrachsig, also für XYZ-Kräfte ausgebaut sein kann.

7. Kraft-Dehnungs-Körperschall-Aufnehmer Kombination nach Ansprüchen 1, 4 und 5, dadurch gekennzeichnet, dass der Ringscheiben-Kristallsatz (4) aus Quarzkristallscheiben besteht.

8. Kraft-Dehnungs-Körperschall-Aufnehmer Kombination nach Ansprüchen 1, 4, 5, 6 und 7, dadurch gekennzeichnet, dass der Ringscheiben-Kristallsatz (4) aus Piezokeramikscheiben aufgebaut ist.

9. Kraft-Dehnungs-Körperschall-Aufnehmer Kombination nach Ansprüchen 1 bis 8, dadurch gekennzeichnet, dass die Körperschallsensoren (6, 24, 35) ein- oder mehrachsige Empfindlichkeit aufweisen können.

10. Kraft-Dehnungs-Körperschall-Aufnehmer Kombination nach Ansprüchen 1 bis 9, dadurch gekennzeichnet, dass die Körperschallsensoren (6, 24, 35) auf piezoelektrischer Basis arbeiten.

11. Kraft-Dehnungs-Körperschall-Aufnehmer Kombination nach Ansprüchen 1 bis 10, dadurch gekennzeichnet, dass die Körperschallsensoren (6, 24, 35) auf piezoresistiver oder kapazitiver Basis arbeiten.

12. Kraft-Dehnungs-Körperschall-Aufnehmer Kombination nach Ansprüchen 1 bis 11, dadurch gekennzeichnet, dass Impedanzwandler/Vorverstärker in die Aufnehmer eingebaut werden.

13. Kraft-Dehnungs-Körperschall-Aufnehmer Kombination nach Ansprüchen 1, 2, 6-12, dadurch gekennzeichnet, dass der Oberflächen-Dehnungsaufnehmer mit einem Körperschallsensor (24) ausgerüstet ist.

14. Kraft-Dehnungs-Körperschall-Aufnehmer Kombination nach Ansprüchen 1-3, 6-13, dadurch gekennzeichnet, dass der Schraub-Dehnungs-Aufnehmer (30), der achsiale Dehnung misst, mit einem Körperschallsensor (35) ausgerüstet ist, der ebenfalls in achsialer Richtung empfindlich ist.

15. Kraft-Dehnungs-Körperschall-Aufnehmer Kombination nach Ansprüchen 1-3, 6-13, dadurch gekennzeichnet, dass der Schraub-Dehnungs-Aufnehmer Dehnungen quer zur Einbauachse misst und einen Körperschallsensor aufweist, der ebenfalls quer zur Einbauachse empfindlich ist.

16. Kraft-Dehnungs-Körperschall-Aufnehmer Kombination nach Ansprüchen 1-15, dadurch gekennzeichnet, dass Körperschallsensoren eingebaut sind mit mehrachsiger Empfindlichkeit.

## Claims

1. Force, strain and structure-borne noise transducer combination for monitoring automatic machine tools, characterized by the accommodation of a structure-borne noise sensor (6) in a single- or multicomponent force sensor inside the crystal annulus set (4).

2. Force, strain and structure-borne noise transducer combination for monitoring automatic machine tools, characterized by the accommodation of a structure-borne noise sensor (24) in a surface strain transducer (20).

3. Force, strain and structure-borne noise transducer combination for monitoring automatic machine tools, characterized by the accommodation of a structure-borne noise sensor (35) in a screw strain transducer (30).

4. Force, strain and structure-borne noise transducer combination according to Claim 1, characterized by the integration in the cover plate (13) of a connection with fine-pitch thread, enabling a frictional bracing in the fitting niche (11) by means of preload nut (12).

5. Force, strain and structure-borne noise transducer combination according to Claim 1, characterized by the integration in the cover plate (15) of a key arrangement, on which the mating key plate (16) with bracing screw (17) is fitted.

6. Force, strain and structure-borne noise transducer combination according to Claims 1, 4 and 5, characterized by the crystal annulus set (4) being monoaxial, i.e. for Z forces also, or multiaxial, i.e. extensible for XYZ forces.

7. Force, strain and structure-borne noise transducer combination according to Claims 1, 4 and 5, characterized by the crystal annulus set (4) consisting of quartz annuli.

8. Force, strain and structure-borne noise transducer combination according to Claims 1, 4, 5, 6 and 7, characterized by the crystal annulus set (4) consisting of piezo-ceramic annuli.

9. Force, strain and structure-borne noise transducer combination according to Claims 1 to 8, characterized by the structure-borne noise sensors (6, 24, 35) being capable of single- or multi-axial sensitivity.

10. Force, strain and structure-borne noise transducer combination according to Claims 1 to 9, characterized by the structure-borne noise sensors (6,24, 35) operating on piezoelectric basis.

11. Force, strain and structure-borne noise transducer combination according to Claims 1 to 10, characterized by the structure-borne noise sensors (6, 24, 35) operating on piezorestive or capacitive basis.

12. Force, strain and structure-borne noise transducer combination according to Claims 1 to 11, characterized by impedance transformer/preamplifiers being fitted in the transducers.

13. Force, strain and structure-borne noise transducer combination according to Claims 1, 2, 6 to 12, characterized by the surface strain transducer being equipped with a structure-borne noise sensor (24).

14. Force, strain and structure-borne noise transducer combination according to Claims 1 to 3, 6 to 13, characterized by the screw strain transducer (30) measuring axial strain being equipped with a structure-borne noise sensor (35), which is also sensitive in the axial direction.

15. Force, strain and structure-borne noise transducer combination according to Claims 1 to 3, 6 to 13, characterized by the screw strain transducer measuring strains normal to the installation axis and having a structure-borne noise sensor which is likewise sensitive to the installation axis.

16. Force, strain and structure-borne noise transducer combination according to Claims 1 to 15, characterized by being fitted with structure-borne noise sensors with multiaxial sensitivity.

## Revendications

1. Combinaison de capteurs de force, d'allongement et de bruit pour la surveillance de machines d'usinage automatisées caractérisée par le fait qu'un capteur de bruit (6) est incorporé entre le jeu de rondelles en cristal (4) d'un capteur de force à une ou plusieurs composantes.

2. Combinaison de capteurs de force, d'allongement et de bruit pour la surveillance de machines d'usinage automatisées caractérisée par le fait qu'un capteur de bruit est logé à l'intérieur d'un capteur d'allongement à surface de contact (20).

3. Combinaison de capteurs de force, d'allongement et de bruit pour la surveillance de machines d'usinage automatisées caractérisée par le fait qu'un capteur de bruit (35) est logé dans un capteur d'allongement à vis (30).

4. Combinaison de capteurs de force, d'allongement et de bruit selon revendication de brevet 1 caractérisée par le fait que la plaque supérieure (13) comporte un filetage fin qui permet, grâce à l'écrou de précontrainte (12), de réaliser un blocage à transmission intégrale des efforts dans le logement (11).

5. Combinaison de capteurs de force, d'allongement et de bruit selon revendication de brevet 1 caractérisée par le fait que la plaque supérieure (15) posséde un dispositif intégré de blocage par clavette sur lequel est bloquée la contre-cale (16) au moyen de sa vis de précontrainte (17).

6. Combinaison de capteurs de force, d'allongement et de bruit selon revendications de brevet 1, 4 et 5 caractérisée par le fait que le jeu de rondelles en cristal (4) peut être adapté à la mesure des forces selon un seul axe, donc que pour des forces selon l'axe des Z ou selon plusieurs axes, et donc pour des forces selon les axes XYZ.

7. Combinaison de capteurs de force, d'allongement et de bruit selon revendications de brevet 1, 4 et 5 caractérisée par le fait que le jeu de rondelles en cristal (4) est composé de rondelles en cristal de quartz.

8. Combinaison de capteurs de force, d'allongement et de bruit selon revendications de brevet 1, 4, 5, 6 et 7 caractérisée par le fait que le jeu de rondelles en cristal (4) est constitué de rondelles en céramique piézique.

9. Combinaison de capteurs de force, d'allongement et de bruit selon revendications de brevet 1 à 8 caractérisée par le fait que les capteurs de bruit (6, 24 35) peuvent être sensibles selon un ou plusieurs axes.

10. Combinaison de capteurs de force, d'allongement et de bruit selon revendications de brevet 1 à 9 caractérisée par le fait que les capteurs de bruit (6, 24 35) travaillent selon le principe piézo-résistif ou capacitif.

11. Combinaison de capteurs de force, d'allongement et de bruit selon revendications de brevet 1 à 10 caractérisée par le fait que les capteurs de bruit (6, 24, 35) travaillent selon le principe piézo-résistif ou capacitif.

12. Combinaison de capteurs de force, d'allongement et de bruit selon revendications de brevet 1 à 11 caractérisée par le fait que le convertisseur d'impédance/pré-amplificateur est incorporé au capteur.

13. Combinaison de capteurs de force, d'allongement et de bruit selon revendications de brevet 1, 2, 6 à 12 caractérisée par le fait que le capteur d'allongement à surface de contact est muni d'un capteur de bruit (24).

14. Combinaison de capteurs de force, d'allongement et de bruit selon revendications de brevet 1 à 3, 6 à 13 caractérisée par le fait que le capteur d'allongement à vis (30) qui mesure les allongements axiaux est équipé d'un capteur de bruit (35) également sensible en direction axiale.

15. Combinaison de capteurs de force, d'allongement et de bruit selon revendications de brevet 1 à 3, 6 à 13 caractérisée par le fait que le capteur d'allongement à vis mesure les allongements perpendiculairement à l'axe de montage et possède un capteur de bruit incorporé également sensible selon une direction normale à l'axe de montage.

16. Combinaison de capteurs de force, d'allongement et de bruit selon revendications de brevet 1 à 15 caractérisée par le fait de l'emploi de capteurs de bruit sensibles selon plusieurs directions.
